Europäisches Patentamt

European Patent Office

Office européen des brevets

(19)

(11) Veröffentlichungsnummer: **0 095 118**
**A1**

(12) ## EUROPÄISCHE PATENTANMELDUNG

(21) Anmeldenummer: **83104799.8**

(22) Anmeldetag: **16.05.83**

(51) Int. Cl.³: **H 05 B 3/74**
**C 04 B 39/12, H 05 B 3/68**

(30) Priorität: **24.05.82 DE 3219392**

(43) Veröffentlichungstag der Anmeldung:
**30.11.83 Patentblatt 83/48**

(84) Benannte Vertragsstaaten:
**AT BE CH DE FR GB IT LI NL SE**

(71) Anmelder: **Grünzweig + Hartmann und Glasfaser AG**
**Bürgermeister-Grünzweig-Strasse 1-47**
**D-6700 Ludwigshafen am Rhein(DE)**

(72) Erfinder: **Kummermehr, Hans**
**Prinzregentenstrasse 25a**
**D-6700 Ludwigshafen(DE)**

(54) **Wärmedämmplatte für die Lagerung einer elektrischen Heizwendel, sowie Verfahren zu ihrer Herstellung.**

(57) Zur Bildung einer selbständig handelbaren Verbund-Wärmedämmplatte (2) wird ein Preßformteil zur Bildung einer mechanisch widerstandsfähigen Lagerschicht (7) für eine elektrische Heizwendel (5) in einer geringen Dicke von beispielsweise 3 mm vorgefertigt. Hierzu wird ein Naßfilz aus Keramikfasern mit flüssigem Bindemittel auf Phosphatbasis gepreßt und durch Trocknung gehärtet, so daß ein formstabiles, steifes Formteil entsteht, welches sodann in die Presse für die Verdichtung des Materials zur Bildung einer Dämmschicht (9) aus hochdispersem, feinteiligem Wärmedämmaterial wie pyrogene Kieselsäure eingebracht wird. Das Material der Dämmschicht (9) wird sodann gegen das Preßformteil verpreßt, so daß eine innige gegenseitige Verbindung durch Verkrallung entsteht. Infolge der geringen Dicke der Lagerschicht (7) bei dennoch guter mechanischer Stabilität und Abdeckung aller kritischen Stellen der Wärmedämmplatte (2) wird die Wärmedämmfähigkeit der Wärmedämmplatte (2) gegenüber einer Herstellung alleine aus dem hochwirksamen Wärmedämmaterial der Dämmschicht (9) nur geringfügig vermindert.

Fig. 1

EP 0 095 118 A1

Grünzweig + Hartmann und
Glasfaser AG

6700 Ludwigshafen

---

Wärmedämmplatte für die Lagerung einer elektrischen Heizwendel, sowie Verfahren zu  ihrer Herstellung

---

Die Erfindung betrifft eine Wärmedämmplatte für die Lagerung einer elektrischen Heizwendel  insbesondere einer
strahlungsbeheizten Kochplatte, nach dem Oberbegriff
des Anspruchs 1, sowie ein Verfahren zu ihrer Herstellung
nach dem Oberbegriff des Anspruchs 4.

Eine derartige Wärmedämmplatte ist aus der DE-OS 30 20 326
bekannt. Die dortige Lagerschicht besteht aus demselben
Grundmaterial wie die Dämmschicht, enthält jedoch ein anorganisches Bindemittel oder einen höheren Anteil an Bindemittel als die Dämmschicht und ist auf diese Weise zur
Verbesserung der mechanischen Widerstandsfähigkeit gehärtet. Die Lagerschicht schließt an die Dämmschicht in einer
ebenen Anlagefläche deutlich unterhalb der Lagermulden für
die Heizwendel an, so daß die gesamte Wärmedämmplatte von
dieser ebenen Anlagefläche an bis in die Spitze des Abstützrandes aus dem Material der Lagerschicht besteht. Das
Material der Lagerschicht weist zugunsten einer Erhöhung
der mechanischen Festigkeit deutlich verminderte Wärmedämmfähigkeit gegenüber der Dämmschicht auf, so daß die
Wärmedämmfähigkeit der gesamten Wärmedämmplatte gegenüber
einer solchen Platte, die ausschließlich aus dem Material
der Dämmschicht besteht, deutlich geringer ist. Dennoch
ist der Gewinn an mechanischer Festigkeit des Materials der Lagerschicht begrenzt, so daß sich etwa bei unachtsamer Montage der Heizwendel oder der Dämmplatte im Herd Beschädigungen ergeben können. Weiterhin ist zur Erzielung einer auch unter im Einzelfall ungünstigen Verhältnissen ausreichenden Temperaturbeständigkeit der Lagerschicht besondere Vorsorge zu treffen, wobei anstelle von Kieselsäureaerogel der Dämmschicht für die Lagerschicht beispielsweise Aluminiumoxid-Aerogel verwendet wird und zusätzlich hochtemperaturbeständige Materialien wie Manganoxid, Titanoxid oder Zirkonoxid eingeführt werden, was den Herstellungsaufwand vergrößert und die Wärmedämmfähigkeit vermindert.

Somit erfüllt die Wärmedämmplatte der DE-OS 30 20 326 zwar die grundsätzlichen Anforderungen einer Verbesserung der mechanischen Stabilität und Temperaturbeständigkeit im Lagerbereich der Heizwendel bei nicht zu drastischem Abfall der Wärmedämmfähigkeit, befriedigt aber im praktischen Einsatz noch nicht vollständig. Ein wesentlicher Vorteil der Wärmedämmplatte der DE-OS 30 20 326 besteht jedoch darin, daß die Wärmedämmplatte auch unabhängig von der sie im Betrieb aufnehmenden Aufnahmeschale herstellbar, handhabbar und transportfähig, insgesamt also handelbar ist, so daß derartige Wärmedämmplatten in einem Fachbetrieb für Wärmedämmtechnik vorgefertigt und so etwa einem Küchengerätehersteller geliefert werden können, der sodann die Montage der Heizwendel und den Einbau der Wärmedämmplatten in die Aufnahmeschalen der Kochplatten vornimmt, ohne daß dabei technische Probleme auftreten.

Der letzgenannte Vorteil ist nicht erzielbar, wenn das Material der Wärmedämmschicht unmittelbar gegen den Boden der Aufnahmeschale verpreßt wird, wie dies beispielsweise aus der DE-OS 30 08 505 bekannt ist, oder in einem Block mit Übermaß vorgefertigt und sodann in die Aufnahmeschale eingepreßt wird, wie dies aus der DE-AS 23 39 768 bekannt ist.

Eine solche selbständig handelbare und für Lagerung und Transport sowie Handhabung mechanisch ausreichend feste Wärmedämmplatte ist hingegen auch gemäß der DE-OS 31 02 935 gemäß § 4 Abs. 3 PatG Stand der Technik, nach der auf die Dämmschicht in einem Spritz- oder Tauchverfahren zur Bildung der Lagerschicht eine maximal etwa 0,5 mm dicke Beschichtung aus gemahlenen mineralischen Fasern mit einem keramischen Bindemittel aufgebracht wird, das bei Temperaturen zwischen etwa 500° C und 1000° C durch keramische Bindung verfestigt. Die keramische Bindung der sehr kurzen Mineralfasern, die eine Länge von maximal etwa 0,02 mm aufweisen, um die Naßbeschichtung der Wärmedämmplatte zu ermöglichen, ergibt jedoch ebenfalls nur eine begrenzte mechanische Festigkeit, so daß im rauhen praktischen Betrieb Beschädigungen auftreten können. Vorteilhaft ist jedoch, daß die Wärmdämmplatte in ihrem gesamten Querschnitt mit Ausnahme der dünnen Beschichtung aus dem Material der Wärmedämmschicht besteht, welches bestmögliche Wärmedämmwirkung auch im seitlichen Bereich am Abstützrand der Wärmedämmplatte ergibt.

Aufgabe der Erfindung ist es, eine selbständig handelbare Wärmedämmplatte der im Oberbegriff des Anspruchs 1 angegebenen Gattung zu schaffen, die bei möglichst geringer Beeinträchtigung der Wärmedämmwirkung eine auch im rauhen praktischen Betrieb ausreichend sichere klebende Befestigung der Heizwendel und beschädigungsfreie, ggf. auch größere Festigkeit erfordernde maschinelle Montage ermöglicht.
Die Lösung dieser Aufgabe erfolgt durch die kennzeichnenden Merkmale des Anspruchs 1.

Dadurch, daß die Lagerschicht als langfaseriges Preßformteil aus mit anorganischem Bindemittel fest gebündenen Keramikfasern ausgebildet ist, ergibt sich neben hervorragender Temperaturbeständigkeit eine ausgezeichnete mechanische Festigkeit der Lagerschicht zur Abstützung gegen die Unterseite der Kochplatte und zur klebenden Befestigung der Heizwendel. Die Dicke der Lagerschicht ergibt einen gewünschten Temperaturabfall zwischen der Heizwendel und dem Material der Dämmschicht, welches zumindest im Bereich seiner Anlagefläche zur Lagerschicht überdies mehr oder weniger stark gehärtet und/oder mit die Temperaturbeständigkeit erhöhenden Zusätzen versehen sein kann, je nach den Erfordernissen entsprechend der gewählten Dicke und Festigkeit der Lagerschicht. In jedem Falle ist jedoch die Lagerschicht relativ dünn und folgt der Kontur der Dämmschicht, so daß die jeweilige Wandstärke der hochwirksamen Dämmschicht auch im Bereich des Abstützrandes voll der Wärmedämmwirkung erhalten bleibt. Das die Lagerschicht bildende Preßformteil wird, beispielsweise ausgehend von einem mit flüssigem Bindemittel versetzten Keramikfaserfilz, einem sog. Naßfilz, durch Pressung in einer Form vorgefertigt und durch Trocknung gehärtet, und sodann an das Material der Wärmedämmschicht im Zuge von dessen Pressung angepreßt oder nach dessen Pressung mit diesem verklebt, so daß eine mechanisch ausreichend feste und selbstständig handelbare Wärmedämmplatte mit der Dämmschicht und der erfindungsgemäß ausgebildeten Lagerschicht entsteht, auf die problemlos die Heizwendel aufgeklebt werden kann und die sodann lediglich noch in die Aufnahmeschale des Herdes eingesetzt werden braucht.

Aus der DE-OS 30 08 505 ist es zwar bekannt, die Heizwendel an einem in die Aufnahmeschale einsetzbaren Einsatzkörper aus mit anorganischem Bindemittel gebundenen Aluminiumsilikat durch Klebung zu befestigen. Der Einsatzkörper, der in der Praxis als vakuumgegosses Formteil dadurch hergestellt wird, daß aus einer Pulpe aus Keramikfaser und einem anorganischen Bindemittel das Wasser durch eine durchlässige Gießform hindurch abgesaugt wird, weist jedoch herstellungsbedingt eine erhebliche Dicke auf. Daher befriedigt ein solcher Einsatzkörper zwar mechanisch in vollem Umfange, gibt jedoch noch in erheblich stärkerem Umfang als die gehärtete Lagerschicht der gattungsgemäßen

DE-OS 30 20 326 zu einem erheblichen Abfall der Wärmedämmfähigkeit Anlaß. Die Dämmschicht ist hierbei nicht mit dem Einsatzkörper zur Bildung einer einstückigen Wärmedämmplatte verbunden, sondern das Material der Dämmschicht ist gegen den Boden der Aufnahmeschale verpreßt, und auf diese Preßschicht wird der Einsatzkörper mit der daran montierten Heizwendel aufgesetzt; eine Vorfertigung kann daher nur unter Verwendung auch der Aufnahmeschale als Preßform für die Dämmschicht erfolgen, und nicht in Form einer selbständig handelbaren Wärmedämmplatte.

Aus der DE-AS 23 39 768 ist es zwar bekannt, zwischen die Dämmschicht und die Heizwendel sowie zwischen die Oberseite des Abstützrandes und die Kochplatte jeweils eine dünne Scheibe aus Keramik-Faser-Gemisch zu legen, die durch metallische Stechklammern gehalten ist, welche die Scheibe durchdringen und im Material der Dämmschicht verankert sind. Abgesehen davon, daß über Herstellungsweise und Material der Scheiben keine näheren Angaben vorliegen, handelt es sich hierbei jedenfalls nicht um ein einstückiges Formteil, das der Kontur der Dämmschicht angepaßt ist, sondern um einfache Zwischenlegscheiben. Auch wird damit keine selbständig handelbare Wärmedämmplatte aus Dämmschicht und Lagerschicht geschaffen, da vor der Befestigung der Heizwendel mit den Metallklammern und vor der damit einhergehenden Befestigung der umfangsseitigen Scheibe am Abstützrand mit entsprechenden Metallklammern die Scheiben lose vorliegen und nicht Bestandteil einer einteiligen Wärmedämmplatte sind.

Die Ansprüche 2 und 3 haben vorteilhafte Weiterbildungen der erfindungsgemäßen Wärmedämmplatte zum Inhalt.

Ein besonders vorteilhaftes Verfahren zur Herstellung insbesondere einer solchen Wärmedämmplatte zur Lagerung einer elektrischen Heizwendel ist im Anspruch 4 angegeben, während Anspruch 5 eine besonders vorteilhafte Weiterbildung dieses Verfahrens zum Inhalt hat.

Weitere Einzelheiten, Merkmale und Vorteile der Erfindung ergeben sich aus der nachfolgenden Beschreibung einer Ausführungsform anhand der Zeichnung.

Es zeigt

Fig. 1      einen Schnitt durch eine erfindungsgemäße Wärmedämmplatte im eingebauten Zustand und

Fig. 2      eine Einzelheit aus Kreis II in Fig. 1 in stark vergrößerter Darstellung.

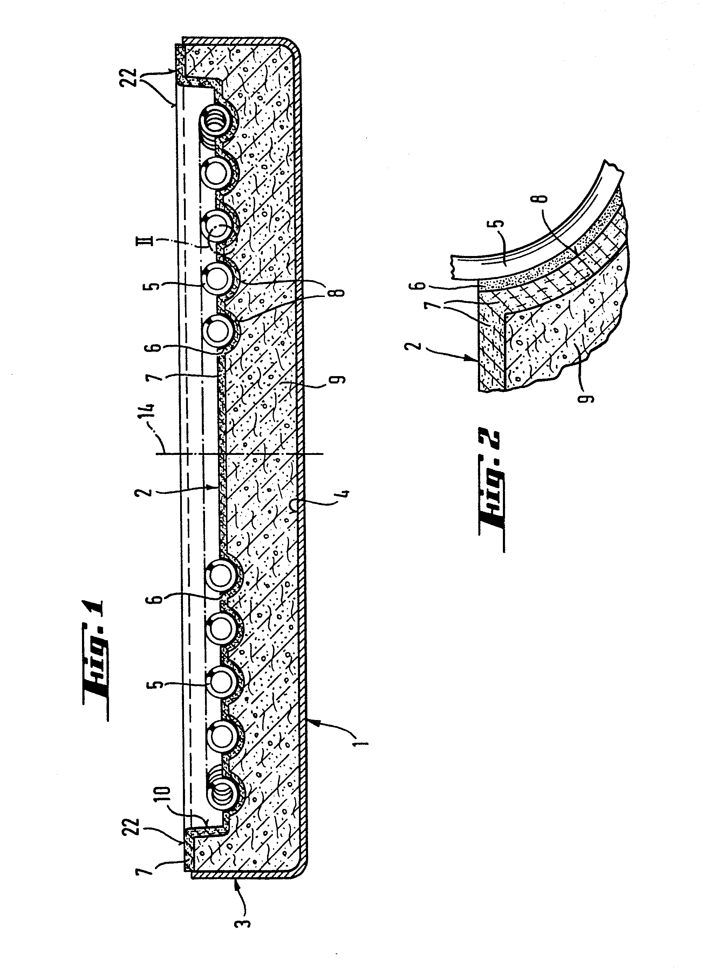

In Fig. 1 ist eine Aufnahmeschale 1 aus Metall, insbesondere Aluminiumblech, zur Aufnahme einer Wärmedämmplatte 2 veranschaulicht, welche an der Innenseite einer Umfangswand 3 der Aufnahmeschale 1 zwischen deren Boden 4 und einer Heizwendel 5 angeordnet ist. Die elektrisch betriebene Heizwendel 5 weist nicht näher dargestellte elektrische Anschlüsse auf, die auf geeignete Weise aus dem Bereich der Aufnahmeschale 1 herausgeführt sind. Die dargestellte Anordnung dient zur Strahlungsbeheizung einer Glaskeramikabdeckung einer Kochplatte, wobei die nicht näher dargestellte Glaskeramikplatte auf einer Auflagefläche 22 aufliegt und damit Abstand vom oberen Rand der Umfangswand 3 der Aufnahmeschale 1 und von der Heizwendel 5 erhält. Die Umfangswand 3 der Aufnahmeschale 1 liegt konzentrisch zu einer Mittelachse 14.

Die Wärmedämmplatte 2 besteht im wesentlichen aus einer Lagerschicht 7 mit wendelförmigen Lagermulden 8 zur Aufnahme der Heizwendel 7 sowie einer in der gewählten Darstellung unter der Lagerschicht 7 angeordneten Dämmschicht 9. Die Dämmschicht 9 liegt im Beispielsfalle frei am Boden 4 der Aufnahmeschale 1 und besteht aus hochdispersem, feinteiligem Metalloxid wie pyrogen erzeugter Kieselsäure, einschließlich Lichtbogenkieselsäure, alkaliarmer Fällungskieselsäure, oder analog hergestelltem Aluminiumoxid, Titandioxid oder Zirkondioxid. Die feinteiligen Metalloxide weisen spezifische Oberflächen von wenigstens 50 m$^2$/g auf. Im Beispielsfalle möge die Dämmschicht 9 feinporiges Kieselsäureaerogel aufweisen, zusammen mit einer Mineralfaserverstärkung und/oder einem Trübungsmittel. Solche hochwirksamen Wärmedämm-Materialien werden durch die Anmelderin unter der Bezeichnung MINILEIT (eingetragenes Warenzeichen) vertrieben, wobei hinsichtlich Einzelheiten des Materials auf die einschlägigen DE-OSen 27 47 663, 27 48 307 und 27 54 956 verwiesen wird, auf die insoweit ausdrücklich Bezug genommen wird. Bevorzugt wird ein Material für die Dämmschicht 9 verwendet, welches aus 30 bis 50 Gew.-% pyrogener Kieselsäure, 20 bis 50 Gew.-% Trübungsmittel und 5 bis 15 Gew.-% Aluminiumfasern besteht, sowie in einem Raumgewicht von 200 bis 400 kg/m$^3$ vorliegt, dabei nicht organisch oder anorganisch gehärtet zu sein braucht, jedoch je nach Bedarf gehärtet werden kann; für Einzelheiten einer solchen Härtung, bei der bevorzugt etwa glasbildende Stoffe eingesetzt werden, wird ausdrücklich auf die DE-OS 29 42 087 Bezug genommen. Ein solches Spezial-Wärmedämmaterial besitzt eine Wärmeleitfähigkeit, die geringer ist, als diejenige ruhender Luft und darüber hinaus nur wenig temperaturabhängig ist.Allerdings sind die aus pulverförmigen Grundstoffen gepreßten Formplatten aus einem solchen Material mechanisch wenig widerstandsfähig. Anstelle von Kieselsäureaerogel kann das Material auch Aluminiumoxid-Aerogel aufweisen, oder eine geeignete Mischung beider Aerogele, um bei Bedarf höhere Temperaturbeständigkeit zu erreichen. Zur weiteren Erhöhung der Temperaturbeständigkeit kann das Dämmaterial der Dämmschicht 9 Zuschläge an hochtemperaturbeständigen Stoffen wie Manganoxid, Zirkonoxid oder Titanoxid enthalten. Für Spezialzwecke kann auch mit deren Aerogelen gearbeitet werden.

Die Heizwendel 5 ist mittels eines Klebers 6 an der Lagerschicht 7 in den wendelförmigen Lagermulden 8 befestigt. Hierzu ist der Kleber 6, was aus der Zeichnung nicht ersichtlich ist, an diskreten Stellen längs der Erstreckung der Heizwendel 5 aufgebracht und sichert so deren Lage an im Abstand voneinander liegenden Stellen. Es stehen geeignete hochtemperaturbeständige anorganische Kleber 6 mit einer Temperaturbeständigkeit bis zu etwa 1150°C, also völlig ausreichend, zur Verfügung. Dabei kann auch auf einen keramischen Kleber zurückgegriffen werden, der durch einen organischen Bindemittelanteil eine Anfangsfestigkeit erhält und bei erhöhten Temperaturen zwischen etwa 500 und 1000°C durch keramische Bindung verfestigt, wie dies im einzelnen aus der DE-OS 31 02 935 ersichtlich ist, auf die wiederum insoweit Bezug genommen wird.

Die Lagerschicht 7 hat im Beispielsfalle eine Dicke von 3 mm und ist als steifes Preßformteil vorgefertigt. Hierzu wird ein Naßfilz oder Naßvlies aus Aluminiumsilikat- oder Quarzfasern mit einem flüssigen Bindemittel in eine Preßform eingeführt, deren Formwände der aus Fig. 1 ersichtlichen Kontur der Lagerschicht 7 entsprechen. In der Preßform wird das Material komprimiert und ggf. gleich in der Preßform durch Wärmezufuhr und Trocknung gehärtet, so daß aus dem flexiblen und gut formbaren Naßfilz oder dgl. ein steifes, formstabiles Preßformteil der gewünschten Kontur entsteht. Das Preßformteil wird sodann in die Presse zur Verdichtung des Aerogelmaterials eingelegt, derart, daß es den die Kontur der Lagermulde wiedergebenden Stempel der Presse an seiner Arbeitsseite auskleidet, worauf das Material der Dämmschicht 9 an das die Lagerschicht 7 bildende Preßformteil angepreßt wird. Dabei kann das Preßformteil, wenn es aus einem Naßfilz gebildet ist und keine Füllstoffe enthält, so luftdurchlässig gehalten werden, daß durch das Preßformteil hindurch die beim Komprimieren des Wärmedämmaterials der Dämmschicht 9 freigesetzte Luft entweichen kann; hierzu kann das die Lagerschicht 7 bildende Preßformteil anstelle einer entsprechenden, gasdurchlässigen, für das Pulver der Wärmedämmschicht 9 jedoch undurchlässigen Abdeckschicht des betreffenden Pressenstempels angeordnet werden, wie sie beispielsweise als Bodenfläche eines aus der DE-OS 30 34 775 ersichtlichen Stempels vor Abzugs- oder Absaugkanälen  für die entweichende Luft angeordnet ist. Alternativ kann jedoch auch die Bodenfläche der Dämmschicht 9 mit einem ebenen Stempel der aus der DE-OS 30 34 775 ersichtlichen Bauart gepreßt werden, der dem Luftabzug dient, während  das Preßformteil der Lagerschicht 7 an einer massiven Oberfläche des Gegenstempels angeordnet ist.

Die Lagerschicht 7 weist in der einleitend erläuterten Weise Aluminiumsilikatfasern erheblicher Länge auf, deren Häufigkeitsverteilung der Faserlänge oberhalb von 3 mm, vorzugsweise oberhalb von 5 mm, liegt, so daß sich ein fester Faserverbund im Preßformteil ergibt, der durch das anorganische Bindemittel beispielsweise auf Phosphatbasis entsprechend stabilisiert und ausgesteift wird. Eine so gebildete Wärmedämmplatte 2 kann separat vorgefertigt, gelagert, transportiert und gehandhabt werden, und wird sodann ohne besondere Zusatzmaßnahmen in die vorbereitete Aufnahmeschale 1 eingesetzt sowie mit den Wicklungen der Heizwendel 5 versehen und durch den Kleber 6 verbunden. Die Lagerschicht 7 deckt dabei den Lagerbereich der Heizwendel 5 mit den Lagermulden 8 flächig ab, liegt an der angrenzenden Umfangswand 10 und an der Auflagefläche 22 in einem Stück vor und schützt auch dort vor jeglichen schädlichen mechanischen Einwirkungen auf das Material der Dämmschicht 9. Bei Bedarf kann das Material der Dämmschicht 9 mit einem Bindemittel versehen und ausgehärtet werden, in dem Umfange, in dem dies für eine Erhöhung der mechanischen Festigkeit zweckmäßig erscheint und gegenüber einer Maximierung der Wärmedämmfähigkeit Vorrang erhält. Weiterhin kann der Umfang der Wärmedämmplatte 2, ggf. auch vollständig geschlossen unter Einschluß der Lagerschicht 7, jedenfalls aber an den von der Lagerschicht 7 nicht erfaßten Außenflächen, durch einen geeigneten Überzug mechanisch insbesondere für Transport und Handhabung vor dem Einbau geschützt werden. Hierzu kann in nicht näher dargestellter Weise zusätzlich eine Beschichtung gemäß der DE-OS 31 02 935 vorgenommen werden, die entsprechend hochtemperaturbeständig ist und in einem Spritz- , Tauch- oder Streichvorgang aufgebracht werden kann. Im Hinblick darauf, daß die seitlichen Abstützränder zu den Auflageflächen 22 hin durch das dortige Material der Dämmschicht 9 gut wärmegedämmt sind, kann jedoch eine Beschichtung der nicht von der Lagerschicht 7 erfaßten freien Außenflächen der Wärmedämmplatte 2 auch mit einem weniger temperaturbeständigen Material wie einem organischen Lack oder dgl. erfolgen, um Beschädigungen dieser freien Außenflächen zu vermeiden.

Grünzweig + Hartmann und
Glasfaser AG

6700 Ludwigshafen

Patentansprüche

1. Wärmedämmplatte für die Lagerung einer elektrischen Heizwendel insbesondere einer strahlungsbeheizten Kochplatte, mit einer Dämmschicht aus feinteiligem, insbesondere pyrogen erzeugtem Metalloxid, insbesondere mit Mineralfaserverstärkung und/oder Trübungsmittel, und mit einer zur Abstützung der Heizwendel dienenden mechanisch stärker als die Dämmschicht belastbaren gepreßten, einstückigen Lagerschicht, die auf ihrer gesamten Anlagefläche mit der Dämmschicht verbunden ist und an deren Oberfläche Lagermulden zur Aufnahme und klebenden Befestigung der Wicklungen der Heizwendel sowie ein umlaufender Abstützrand zur Anlage an der Unterseite der Kochplatte vorgesehen sind, dadurch gekennzeichnet, daß die Lagerschicht (7) als vorgefertigtes Preßformteil aus mit anorganischem Bindemittel gebundenen Keramikfasern ausgebildet ist, dessen Keramikfasern ein Maximum der Häufigkeitsverteilung der Faserlänge über 3 mm, insbesondere über 5 mm besitzen, daß die Dämmschicht (9) einen seitlich umlaufenden Abstützrand sowie ebenfalls eine die Lagermulden (8) aufweisende Oberflächenausbildung aufweist, und daß die Lagerschicht (7) der Kontur der Dämmschicht (9) an der Anlagefläche in einer Schichtdicke von weniger als 5 mm, vorzugsweise zwischen 1 und 4 mm, insbesondere 2 bis 3 mm folgt.

2. Wärmedämmplatte nach Anspruch 1, dadurch gekennzeichnet, daß das als Lagerschicht (7) dienende Preßformteil

füllstoffrei vorliegt.

3. Wärmedämmplatte nach Anspruch 1 oder 2, gekennzeichnet durch Aluminiumsilikat- oder Quarzfasern als Keramikfasern.

4. Verfahren zur Herstellung einer Wärmedämmplatte insbesondere nach einem der Ansprüche 1 bis 3, bei dem die Lagerschicht im Zuge der Verdichtung des Materials der Dämmschicht an diese unter gegenseitiger Verkrallung angepreßt wird, dadurch gekennzeichnet, daß Keramikfasern mit flüssigem Bindemittel zur Bildung des Preßformteils der Lagerschicht vorgepreßt und durch Trocknung gehärtet sowie anschließend in den Preßraum für die Dämmschicht eingebracht werden, und daß das Material der Dämmschicht gegen das so gebildete Preßformteil verpreßt wird.

5. Verfahren nach Anspruch 4, dadurch gekennzeichent, daß im Zuge des Preßvorgangs Luft aus dem Material der Dämmschicht durch das Preßformteil für die Lagerschicht hindurch abgeführt wird.

_Fig. 1_

_Fig. 2_

0095118

## EINSCHLÄGIGE DOKUMENTE

EP 83104799.8

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,A | DE - A1 - 3 020 326 (GRÜNZWEIG UND HARTMANN) <br><br> * Gesamt * <br><br> -- | 1,4 | H 05 B  3/74 <br> C 04 B 39/12 <br> H 05 B  3/68 |
| D,A | DE - A1 - 3 008 505 (GRÜNZWEIG UND HARTMANN) <br><br> * Gesamt * <br><br> -- | 1 | |
| P,A, P | DE - A1 - 3 102 935 (GRÜNZWEIG UND HARTMANN) <br><br> * Gesamt * <br><br> -- | 1,4 | |
| A | US - A - 3 612 828 (D.C. SIEGLA) <br><br> * Spalte 2, Zeilen 42-51; Spalte 3, Zeile 22 - Spalte 5, Zeile 9; Fig. 2-4 * <br><br> -- | 1 | |
| D,A | DE - A - 2 339 768 (MC WILLIAMS) <br><br> -- | | RECHERCHIERTE SACHGEBIETE (Int. Cl. ³) <br><br> H 05 B  3/00 <br> C 04 B 39/00 <br> C 04 B 43/00 |
| D,A | DE - A1 - 2 748 307 (GRÜNZWEIG UND HARTMANN) <br><br> -- | | |
| D,A | DE - A1 - 2 747 663 (GRÜNZWEIG UND HARTMANN) <br><br> -- | | |
| A | DE - A1 - 2 729 930 (FISCHER) <br><br> ---- | | |

Der vorliegende Recherchenbericht wurde für alle Patentansprüche erstellt.

| Recherchenort | Abschlußdatum der Recherche | Prüfer |
|---|---|---|
| WIEN | 01-09-1983 | TSILIDIS |